# EUROPEAN PATENT APPLICATION

(11) **EP 4 002 259 A1**
(43) Date of publication of application: **25.05.2022**
(21) Application number: 21208741.5
(22) Date of filing: 17.11.2021
(51) Int. Cl.: G06Q 40/00

(54) **ASSERTING GENERAL LEDGER BALANCE CHANGES**

(30) Priority: 18.11.2020 US 202016951273
(71) Applicant: Sage Intacct Inc, San Jose, CA 95110 (US)
(72) Inventor: SHIROLE, Naveen, Bengaluru (IN); SINGH, Niraj Kumar, Bengaluru (IN); MEDEIROS, John, Aptos, California (US)
(74) Representative: Definition IP Limited

(57) **Abstract**

A software application or module enables real-time tracking and auditing of general ledger assertions in real-time during the processing of a given event with respect to a particular contract, ensuring that all entries are reconciled and recorded as they occur. The system allows an internal audit to be performed in real-time, and can be configured to automatically block workflow in the case of a discrepancy between a contract and the general ledger as revealed by the audit.

## Description

### TECHNICAL FIELD

The present document relates to techniques for generating accurate assertions of general ledger balance changes.

### BACKGROUND

Revenue is a core element of any entity's financial statements. It forms the basis of many financial measures that are used to analyze performance of a company over time, and to compare companies to one another. Consistent recognition of revenue is essential to ensuring the integrity of such performance measures.

Accounting Standards Codification (ASC) 606 is a relatively new accounting standard that provides a framework for consistent recognition of revenue among companies. ASC 606 was developed by the Financial Accounting Standard's Board (FASB) and International Accounting Standards Board (IASB), and went into effect in 2017. The purpose of ASC 606 is to eliminate variations in the way businesses across industries handle accounting (particularly, revenue recognition) for similar transactions.

ASC 606 imposes, among other requirements, enhanced disclosure requirements intended to provide additional information for financial statements. In particular, ASC 606 directs entities to recognize revenue at the time the promised goods or services are transferred to the customer. The amount of revenue recognized should equal the total consideration an entity expects to receive in return for the goods or services.

ASC 606 establishes the following five-step approach to determine the amount and timing of revenue recognition:
- Step 1: Identify the contract with a customer;
- Step 2: Identify the performance obligations in the contract;
- Step 3: Determine the transaction price for the performance obligations;
- Step 4: Allocate the transaction price across the performance obligations, based on the obligations' standalone selling price (SSP); and
- Step 5: Recognize revenue when (or as) the entity satisfies each performance obligation.

Entities are required to provide disclosures as to such activity in various financial reports. In particular, ASC 606 imposes an obligation to "disclose sufficient information to enable users of financial statements to understand the nature, amount, timing, and uncertainty of revenue and cash flows arising from contracts with customers."

Compliance with the real-time requirements for revenue recognition and disclosures can be challenging for entities that use conventional accounting software, as the amount of data involved and the underlying accounting entries can become overwhelming to review and audit at the end of a given period. In situations where contracts are entered ("booked") and subsequently modified, multiple reallocations may be required, generating additional obligations with each such event. In addition, the timing of such events can change between obligations, creating additional impact on accounting operations and requirements.

Adapting conventional accounting software systems to review and audit transactions in accordance with the requirements imposed by ASC 606 consequently gives rise to specific data processing challenges due to: the increased amount of data to be processed; the increased number of calculations necessary to correctly recognize revenue, and, not least, the fact that these calculations must be sequenced correctly to accommodate the fact that ASC 606 imposes accounting reporting requirements at various stages of transactions during which, for example additional obligations may be added and contract modifications may occur. To address these challenges with conventional accounting software systems little choice is provided other than dedicating additional computing resource to undertake the calculations and additional data entry capacity to receive the additional data.

### SUMMARY

In accordance with a first aspect of the invention, there is provided a system for asserting and auditing general ledger balance changes associated with accounting transactions. The system comprises: a storage device, configured to post general ledger adjustments corresponding to an accounting transaction; and a hardware processor, communicatively coupled to the storage device, configured to, in response to the posted general ledger adjustments, and substantially in real-time, performing the steps of: automatically activating an assertion utility to perform an audit to assess the accuracy of the posted general ledger adjustments; responsive to the audit indicating that the posted general ledger adjustments are accurate, causing the storage device to store the transaction as a valid transaction; responsive to the audit indicating that the posted general ledger adjustments are not accurate, stopping the storage device from storing the transaction as a valid transaction; and generating a notification as to the result of the audit; and an electronic communications device, communicatively coupled to the hardware processor, configured to transmit the generated notification.

Optionally, automatically activating the assertion utility to perform the audit to assess the accuracy of the posted general ledger adjustments comprises automatically checking the posted general ledger adjustments against current accounting rules.

Optionally, automatically checking the posted general ledger adjustments against current accounting rules comprises automatically checking whether the posted general ledger adjustments accurately recognize revenue.

Optionally, automatically activating the assertion utility to perform the audit to assess the accuracy of the posted general ledger adjustments comprises automatically determining whether the posted general ledger adjustments comply with ASC 606 accounting standards.

Optionally, the accounting transaction comprises fulfillment of at least a portion of at least one obligation of a contract.

Optionally, the accounting transaction comprises fulfillment of a plurality of obligations in a multi-element arrangement.

Optionally, the general ledger adjustments corresponding to the accounting transaction comprise adjustments based on standalone selling price for at least one element of the multi-element arrangement.

In accordance with a second aspect of the invention, there is provided a computer-implemented method for asserting and auditing general ledger balance changes associated with accounting transactions. The method comprises: at a storage device, posting general ledger adjustments corresponding to an accounting transaction; and in response to the posted general ledger adjustments, and substantially in real time, performing the steps of: at a hardware processor, automatically activating an assertion utility to perform an audit to assess the accuracy of the posted general ledger adjustments; at the hardware processor, responsive to the audit indicating that the posted general ledger adjustments are accurate, causing the storage device to store the transaction as a valid transaction; at the hardware processor, responsive to the audit indicating that the posted general ledger adjustments are not accurate, stopping the storage device from storing the transaction as a valid transaction; at the hardware processor, generating a notification as to the result of the audit; and transmitting the generated notification.

Optionally, automatically activating the assertion utility to perform the audit to assess the accuracy of the posted general ledger adjustments comprises automatically checking the posted general ledger adjustments against current accounting rules.

Optionally, automatically checking the posted general ledger adjustments against current accounting rules comprises automatically checking whether the posted general ledger adjustments accurately recognize revenue.

Optionally, automatically activating the assertion utility to perform the audit to assess the accuracy of the posted general ledger adjustments comprises automatically determining whether the posted general ledger adjustments comply with ASC 606 accounting standards.

Optionally, the accounting transaction comprises fulfillment of at least a portion of at least one obligation of a contract.

Optionally, the accounting transaction comprises fulfillment of a plurality of obligations in a multi-element arrangement.

Optionally, the general ledger adjustments corresponding to the accounting transaction comprise adjustments based on standalone selling price for at least one element of the multi-element arrangement.

In accordance with a third aspect of the invention, there is provided a computer-readable medium comprising instructions which, when executed by a computer, cause the computer to carry out the steps of the method of the second aspect.

Also disclosed herein is a non-transitory computer-readable medium for asserting and auditing general ledger balance changes associated with accounting transactions, comprising instructions stored thereon, that when performed by a hardware processor, perform the steps of: receiving posted general ledger adjustments corresponding to an accounting transaction; and in response to the posted general ledger adjustments, and substantially in real-time: automatically activating an assertion utility to perform an audit to assess the accuracy of the posted general ledger adjustments; responsive to the audit indicating that the posted general ledger adjustments are accurate, causing the storage device to store the transaction as a valid transaction; responsive to the audit indicating that the posted general ledger adjustments are not accurate, stopping the storage device from storing the transaction as a valid transaction; generating a notification as to the result of the audit; and transmitting the generated notification.

Optionally, automatically activating the assertion utility to perform the audit to assess the accuracy of the posted general ledger adjustments comprises automatically checking the posted general ledger adjustments against current accounting rules.

Optionally, automatically checking the posted general ledger adjustments against current accounting rules comprises automatically checking whether the posted general ledger adjustments accurately recognize revenue.

Optionally, automatically activating the assertion utility to perform the audit to assess the accuracy of the posted general ledger adjustments comprises automatically determining whether the posted general ledger adjustments comply with ASC 606 accounting standards.

Optionally, the accounting transaction comprises fulfillment of at least a portion of at least one obligation of a contract.

Optionally, the general ledger adjustments corresponding to the accounting transaction comprise adjustments based on standalone selling price for at least one element of the multi-element arrangement.

In accordance with certain embodiments of the invention a technique is provided for asserting and auditing general ledger balance changes which are compliant with the requirements of ASC 606 and can be undertaken with improved computational efficiency and accuracy in comparison with conventional accounting software systems. In particular, an assertion utility is provided which is activated in response to a posted general ledger adjustment and which, when activated, substantially in real time performs an audit to assess the accuracy of the posted general ledger adjustment. Further, depending on the outcome of the audit, the transaction is stored as valid or invalid and a corresponding notification generated.

By performing these data processing operations substantially in real time, the requirements of ASC 606 are met in real-time, negating any requirement to reconcile multiple transactions at the end of a given period and reducing the data processing overhead that this would impose. Moreover, by performing these data processing operations in real-time reduces the likelihood of auditing and reporting errors.

Further details and variations are described herein.

Various further features and aspects of the invention are defined in the claims.

### BRIEF DESCRIPTION OF THE DRAWINGS

The accompanying drawings, together with the description, illustrate several embodiments. One skilled in the art will recognize that the particular embodiments illustrated in the drawings are merely exemplary, and are not intended to limit scope.
Fig. 1 is a block diagram depicting a hardware architecture for implementing the techniques described herein according to one embodiment.
Fig. 2 is a block diagram depicting a hardware architecture for implementing the techniques described herein in a client/ server environment, according to one embodiment.
Fig. 3 is an example of table depicting various posting types and classifications for a given contract to meet ASC 606 disclosure requirements.
Fig. 4 is a flow diagram depicting a workflow that follows a single obligation on a single contract, according to one embodiment.
Figs. 5A and 5B depict an illustrative example of application of the workflow depicted in Fig. 4.
Fig. 6 is a flow diagram depicting an example of a life cycle events diagram, wherein a contract includes two obligations, according to one embodiment.
Figs. 7 and 8 are event trace diagrams depicting a method for generating and auditing general ledger assertions for a contract transaction according to one embodiment.

### DETAILED DESCRIPTION OF THE EMBODIMENTS

In order to satisfy the above-described disclosure requirements, a number of workflows and accounting transactions may need to be performed. As described in more detail below, these workflows and accounting transactions provide mechanisms by which entities perform operations such as:
- tracking obligations on contracts;
- reallocating transactional values across obligations;
- invoicing for services;
- receiving payments on invoices;
- issuing credits/ debooks/discounts/cancellations; and
- recognizing revenue for contracts.

In at least one embodiment, the techniques described herein may be implemented in a contract accounting application that supports these types of transactions, and records value for the transactions at a subledger level.

In various embodiments, the system and method described herein facilitate and enable real-time auditing during the processing of a given event with respect to a particular contract, ensuring that all entries are reconciled and recorded as they occur. The described techniques allow general ledger (GL) assertions to be tracked in real-time as events occur. In at least one embodiment, an internal audit can take place in real-time, and workflow can be automatically blocked in the case of a discrepancy between a contract and the general ledger as revealed by the audit.

In at least one embodiment, the real-time audit capability described herein ensures that all entries are reconciled and recorded immediately as they occur, thereby improving accuracy and ensuring compliance with ASC 606 requirements.

The systems and methods set forth herein may be applied to many contexts in which it can be useful to assert and audit general ledger balance changes. For illustrative purposes, the description herein is set forth in the context of such assertions for an obligation on a contract, wherein the assertions are tracked and audited on a real-time basis. However, one skilled in the art will recognize that the described techniques can be used in many other contexts. In addition, the particular hardware arrangement depicted and described herein is a simplified example for illustrative purposes.

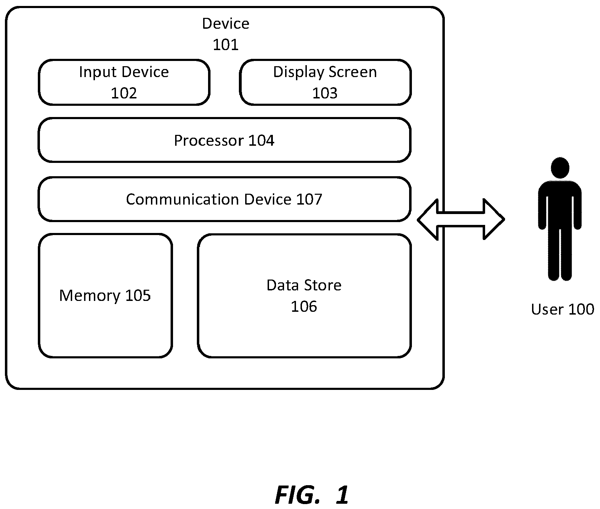

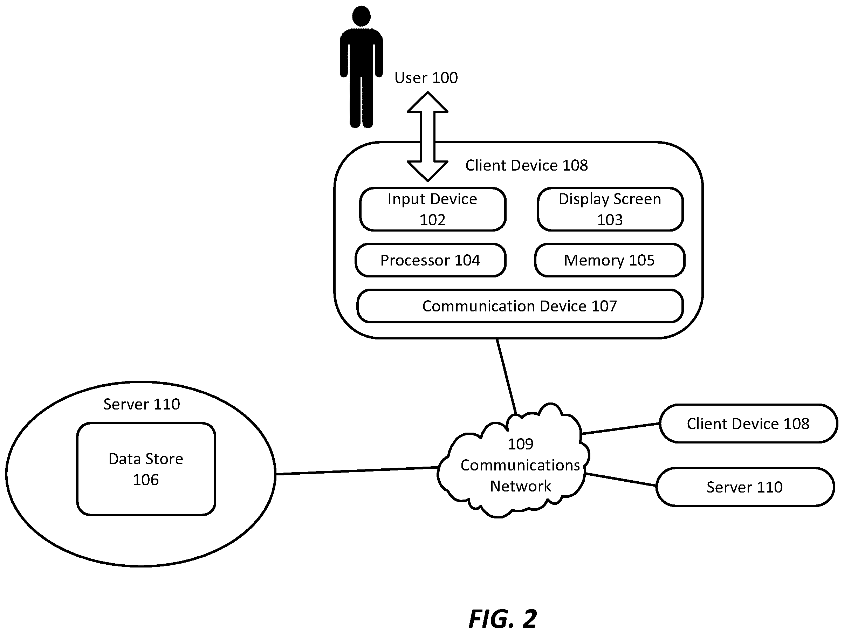

In some embodiments, one or more components, as shown and described below in connection with Figs. 1 and 2, may be used to implement the system and method described herein. Such components may be implemented in a cloud computing-based client/ server architecture, using, for example, Amazon Web Services, an on-demand cloud computing platform available from Amazon.com, Inc. of Seattle, Washington. Therefore, for illustrative purposes, the system and method are described herein in the context of such an architecture. One skilled in the art will recognize, however, that the system and method can be implemented using other architectures, such as for example a stand-alone computing device rather than a client/server architecture.

Further, the functions and/or method steps set forth below may be carried out by software running on one or more of the device 101, client device(s) 108, server 110, and/or other components. This software may optionally be multi-function software that is used to retrieve, store, manipulate, and/or otherwise use data stored in data storage devices such as data store 106, and/or to carry out one or more other functions.

### Definitions and Concepts

For illustrative purposes and for ease of explanation, the following definitions and concepts are used herein:
- **Transaction:** A specific transaction record belonging to a specific transaction type identified by a unique identifier.
- **Transaction type:** Transactions may be categorized according to type, including, for example, invoice, revenue recognition, payment, and the like.
- **Transaction amount:** In the context of the techniques described herein, a transaction amount is the amount by which a general ledger (GL) is affected when a transaction is posted. Examples include an invoice amount, payment amount, recognition amount, and the like.
- **GL Account:** The GL may include any number of accounts, each identified by a unique account number. For any particular transaction type, a set of GL accounts that may be affected by that transaction type may be configured. Then, when a transaction of that type is posted to GL, assertions are made against accounts in the corresponding set. For example, a particular contract level may specify a set of six types of revenue accounts and three types of AR accounts.
- **Journal entry batch:** In at least one embodiment, a double entry accounting system is implemented, wherein at least two entries take place for each transaction. For example, one or more GL accounts may be debited (DB) and one or more GL accounts may be credited (CR), such that the sum of the debits equals the transaction amount, and the sum of the credits also equals the transaction amount. The combined set of entries is referred to as a journal entry (JE) batch.
- **Accounting rule:** In at least one embodiment, each accounting rule has a unique identifier and a text description. Rules may be specific to a transaction type. For example, a rule may specify that, when entering a transaction, the sum of all credits to revenue accounts must equal an invoice amount.
- **Application module:** A software application (or part of a software application) for processing transactions. In at least one embodiment, a set of application modules may collaborate to complete a financial transaction. For example, the output of a contract accounting module may be posts that are received by a receivables subledger module, which in turn generates invoices.
- **GL assertion utility:** A software component that may be implemented, for example, as part of an accounting software package. Given a transaction, its type, and transaction amount, the GL assertion utility checks whether specified accounting rules are being followed, using techniques described herein. If an assertion fails, then the GL assertion utility can stop the transaction from posting to GL, and can include a reference to the assertion rule that failed.
- **Multi-Element Arrangement (MEA):** An arrangement whereby multiple products, obligations, and/or elements may be included in a single product bundle offering.
- **Standalone Selling Price (SSP):** A price at which a product, obligation, or element would be sold if it were offered as a standalone product.

In addition, for purposes of the description herein, a "user", such as user 100 referenced herein, is an individual, enterprise, or other group, which may optionally include one or more users. A "data store", such as data store 106 referenced herein, is any device capable of digital data storage, including any known hardware for nonvolatile and/or volatile data storage. A collection of data stores 106 may form a "data storage system" that can be accessed by multiple users. A "computing device", such as device 101 and/or client device(s) 108, is any device capable of digital data processing. A "server", such as server 110, is a computing device that provides data storage, either via a local data store, or via connection to a remote data store. A "client device", such as client device 108, is an electronic device that communicates with a server, provides output to a user, and accepts input from a user.

### System Architecture

According to various embodiments, the system and method can be implemented on any electronic device or set of interconnected electronic devices, each equipped to receive, store, and present information. Each electronic device may be, for example, a server, desktop computer, laptop computer, smartphone, tablet computer, and/or the like. As described herein, some devices used in connection with the system described herein are designated as client devices, which are generally operated by end users. Other devices are designated as servers, which generally conduct back-end operations and communicate with client devices (and/or with other servers) via a communications network such as the Internet. In at least one embodiment, the methods described herein can be implemented in a cloud computing environment using techniques that are known to those of skill in the art.

In addition, one skilled in the art will recognize that the techniques described herein can be implemented in other contexts, and indeed in any suitable device, set of devices, or system capable of interfacing with existing enterprise data storage systems. Accordingly, the following description is intended to illustrate various embodiments by way of example, rather than to limit scope.

Referring now to Fig. 1, there is shown a block diagram depicting a hardware architecture for practicing the described system, according to one embodiment. Such an architecture can be used, for example, for implementing the techniques of the system in a computer or other device 101. Device 101 may be any electronic device.

In at least one embodiment, device 101 includes a number of hardware components well-known to those skilled in the art. Input device 102 can be any element that receives input from user 100, including, for example, a keyboard, mouse, stylus, touch-sensitive screen (touchscreen), touchpad, trackball, accelerometer, microphone, or the like. Input can be provided via any suitable mode, including for example, one or more of: pointing, tapping, typing, dragging, and/or speech. In at least one embodiment, input device 102 can be omitted or functionally combined with one or more other components.

Data store 106 can be any magnetic, optical, or electronic storage device for data in digital form; examples include flash memory, magnetic hard drive, CD-ROM, DVD-ROM, or the like. In at least one embodiment, data store 106 stores information that can be utilized and/or displayed according to the techniques described below. Data store 106 may be implemented in a database or using any other suitable arrangement. In another embodiment, data store 106 can be stored elsewhere, and data from data store 106 can be retrieved by device 101 when needed for processing and/or presentation to user 100. Data store 106 may store one or more data sets, which may be used for a variety of purposes and may include a wide variety of files, metadata, and/or other data.

In at least one embodiment, data store 106 may store accounting transaction data and/or other data that can be used in tracking obligations, contracts, and/or general ledger assertions. In at least one embodiment, such data can be stored at another location, remote from device 101, and device 101 can access such data over a network, via any suitable communications protocol.

In at least one embodiment, data store 106 may be organized in a file system, using well known storage architectures and data structures, such as relational databases. Examples include Oracle, MySQL, and PostgreSQL. Appropriate indexing can be provided to associate data elements in data store 106 with each other. In at least one embodiment, data store 106 may be implemented using cloud-based storage architectures such as NetApp (available from NetApp, Inc. of Sunnyvale, California) and/or Google Drive (available from Google, Inc. of Mountain View, California).

Data store 106 can be local or remote with respect to the other components of device 101. In at least one embodiment, device 101 is configured to retrieve data from a remote data storage device when needed. Such communication between device 101 and other components can take place wirelessly, by Ethernet connection, via a computing network such as the Internet, via a cellular network, or by any other appropriate communication systems.

In at least one embodiment, data store 106 is detachable in the form of a CD-ROM, DVD, flash drive, USB hard drive, or the like. Information can be entered from a source outside of device 101 into a data store 106 that is detachable, and later displayed after the data store 106 is connected to device 101. In another embodiment, data store 106 is fixed within device 101.

In at least one embodiment, data store 106 may be organized into one or more well-ordered data sets, with one or more data entries in each set. Data store 106, however, can have any suitable structure. Accordingly, the particular organization of data store 106 need not resemble the form in which information from data store 106 is displayed to user 100. In at least one embodiment, an identifying label is also stored along with each data entry, to be displayed along with each data entry.

Display screen 103 can be any element that displays information such as text and/or graphical elements. In particular, display screen 103 may display a user interface for presenting GL reports and/or for prompting the user to accept or reject GL assertions. In at least one embodiment where only some of the desired output is presented at a time, a dynamic control, such as a scrolling mechanism, may be available via input device 102 to change which information is currently displayed, and/or to alter the manner in which the information is displayed.

Processor 104 can be a conventional microprocessor for performing operations on data under the direction of software, according to well-known techniques. Memory 105 can be random-access memory, having a structure and architecture as are known in the art, for use by processor 104 in the course of running software.

A communication device 107 may communicate with other computing devices through the use of any known wired and/or wireless protocol(s). For example, communication device 107 may be a network interface card ("NIC") capable of Ethernet communications and/or a wireless networking card capable of communicating wirelessly over any of the 802.11 standards. Communication device 107 may be capable of transmitting and/or receiving signals to transfer data and/or initiate various processes within and/or outside device 101.

Referring now to Fig. 2, there is shown a block diagram depicting a hardware architecture in a client/ server environment, according to one embodiment. Such an implementation may use a "black box" approach, whereby data storage and processing are done completely independently from user input/ output. An example of such a client/server environment is a web-based implementation, wherein client device 108 runs a browser that provides a user interface for interacting with web pages and/or other web-based resources from server 110. Items from data store 106 can be presented as part of such web pages and/or other web-based resources, using known protocols and languages such as Hypertext Markup Language (HTML), Java, JavaScript, and the like.

Client device 108 can be any electronic device incorporating input device 102 and/or display screen 103, such as a desktop computer, laptop computer, personal digital assistant (PDA), cellular telephone, smartphone, music player, handheld computer, tablet computer, kiosk, game system, wearable device, or the like. Any suitable type of communications network 109, such as the Internet, can be used as the mechanism for transmitting data between client device 108 and server 110, according to any suitable protocols and techniques. In addition to the Internet, other examples include cellular telephone networks, EDGE, 3G, 4G, 5G, long term evolution (LTE), Session Initiation Protocol (SIP), Short Message Peer-to-Peer protocol (SMPP), SS7, Wi-Fi, Bluetooth, ZigBee, Hypertext Transfer Protocol (HTTP), Secure Hypertext Transfer Protocol (SHTTP), Transmission Control Protocol / Internet Protocol (TCP/IP), and/or the like, and/or any combination thereof. In at least one embodiment, client device 108 transmits requests for data via communications network 109, and receives responses from server 110 containing the requested data. Such requests may be sent via HTTP as remote procedure calls or the like.

In one implementation, server 110 is responsible for data storage and processing, and incorporates data store 106. Server 110 may include additional components as needed for retrieving data from data store 106 in response to requests from client device 108.

As also set forth in Fig. 1, data store 106 may be organized into one or more well-ordered data sets, with one or more data entries in each set. Data store 106, however, can have any suitable structure, and may store data according to any organization system known in the information storage arts, such as databases and other suitable data storage structures. As in Fig. 1, data store 106 may store accounting transaction data and/or other data that can be used in generating and recording GL assertions; alternatively, such data can be stored elsewhere (such as at another server) and retrieved as needed.

In addition to or in the alternative to the foregoing, data may also be stored in a data store 106 present in client device 108. In some embodiments, such data may include elements distributed between server 110 and client device 108 and/or other computing devices in order to facilitate secure and/or effective communication between these computing devices.

As also set forth in Fig. 1, display screen 103 can be any element that displays information such as text and/or graphical elements. Various user interface elements, dynamic controls, and/or the like may be used in connection with display screen 103.

As also set forth in Fig. 1, processor 104 can be a conventional microprocessor for use in an electronic device to perform operations on data under the direction of software, according to well-known techniques. Memory 105 can be random-access memory, having a structure and architecture as are known in the art, for use by processor 104 in the course of running software. A communication device 107 may communicate with other computing devices through the use of any known wired and/or wireless protocol(s), as also set forth in the description of Fig. 1.

In one embodiment, some or all of the system can be implemented as software written in any suitable computer programming language, whether in a standalone or client/ server architecture. Alternatively, it may be implemented and/or embedded in hardware.

Notably, multiple servers 110 and/or multiple client devices 108 may be networked together, and each may have a structure similar to those of client device 108 and server 110 that are illustrated in Fig. 2. The data structures and/or computing instructions used in the performance of methods described herein may be distributed among any number of client devices 108 and/or servers 110. As used herein, "system" may refer to any of the components, or any collection of components, from Figs. 1 and/or 2, and may include additional components not specifically described in connection with Figs. 1 and 2.

In some embodiments, data within data store 106 may be distributed among multiple physical servers. Thus, data store 106 may represent one or more physical storage locations, which may communicate with each other via the communications network and/or one or more other networks (not shown). In addition, server 110 as depicted in Fig. 2 may represent one or more physical servers, which may communicate with each other via communications network 109 and/or one or more other networks (not shown).

In one embodiment, some or all components of the system can be implemented in software written in any suitable computer programming language, whether in a standalone or client/server architecture. Alternatively, some or all components may be implemented and/or embedded in hardware.

### Real-Time Validity Requirements

The reporting requirements defined in ASC 606 specify that a contract's assets and liabilities must be recorded and available for disclosure at any point in the contract's lifecycle. In at least one embodiment, in order to satisfy this requirement, a contract accounting application records contract activity through three distinct posting types (deferred revenue, sales revenue, and accounts receivable) and across three distinct classifications (unbilled, billed, and paid).

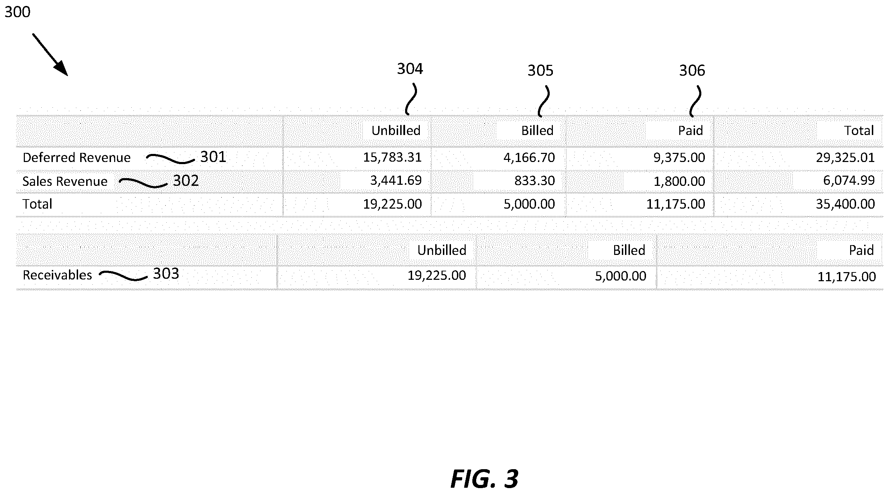

Referring now to Fig. 3, there is shown an example of a table 300 depicting these posting types and classifications for a given contract to meet ASC 606 disclosure requirements. Table 300 includes Deferred Revenue row 301, Sales Revenue row 302, and Accounts Receivable row 303. Table 300 further includes Unbilled column 305, Billed column 306, and Paid column 307. Example values are shown for each cell within table 300.

The various events and transactions taking place in a contract's lifecycle may occur in any processing order and at any point in time. In general, each transaction ultimately becomes a debit and credit on the entity's general ledger, and may affect two or more GL accounts for one or more obligations on a given line as may appear in table 300. ASC 606 requires that these debits and credits flow through a variety of general ledger accounts to ensure satisfaction of disclosure requirements.

In at least one embodiment, the system described herein automatically verifies that all values recorded in the contract subledger are audited in real time when recorded as debits and credits to the general ledger. The system further performs real-time audits of debit/credit journal entries to ensure that such transactions are assigned to the correct GL accounts, as well as to verify correct balances for the obligations on a contract. In this manner, the system ensures correct accounting and compliance with disclosure requirements.

In many situations, ASC 606 imposes accounting reporting requirements at various stages of transactions, such as when contracts are booked, when additional obligations are added, when contract modifications occur, and when reallocation is required. The timing of such events can change between obligations, causing additional complexity. In at least one embodiment, the system described herein provides for real-time recording and auditing during the processing of a given event, so as to ensure that all entries are accurately recorded and reconciled as they occur.

### Overview

In at least one embodiment, the described system can be implemented in a software application or module, which may be a standalone application or part of an accounting software package. The application may be run locally at a computing device, or it can be implemented in a client/server arrangement, such as via a browser, app, or other arrangement.

In at least one embodiment, the application may include multiple tiers and/or modules that process complex financial transactions and perform transactions to modify the state of general ledger (GL) account balances. These various tiers and/or modules may interact with one another as appropriate; in at least one embodiment, each tier or module may be responsible for one part of the transaction processing.

In many situations, strict input validation may be performed on module boundaries, so as to ensure that invalid input is caught. However, such measures do not necessarily guarantee that the final output as reflected in the GL is in its correct state.

In at least one embodiment, the described system generates and/or audits GL assertions to address this issue. GL assertions impose accounting rules that may be applied to a group of accounts that may be affected by transaction processing. By generating and/or auditing GL assertions in real time, the described system ensures that no transaction can be committed to the database if certain rules are not satisfied.

In at least one embodiment, GL assertions are generated and audited automatically, at the end of transaction processing. In at least one embodiment, GL assertions may be generated and audited by software code that is written outside of business logic code, thereby ensuring the independence of such assertions from the code that generated the initial GL results.

### Conceptual Workflow

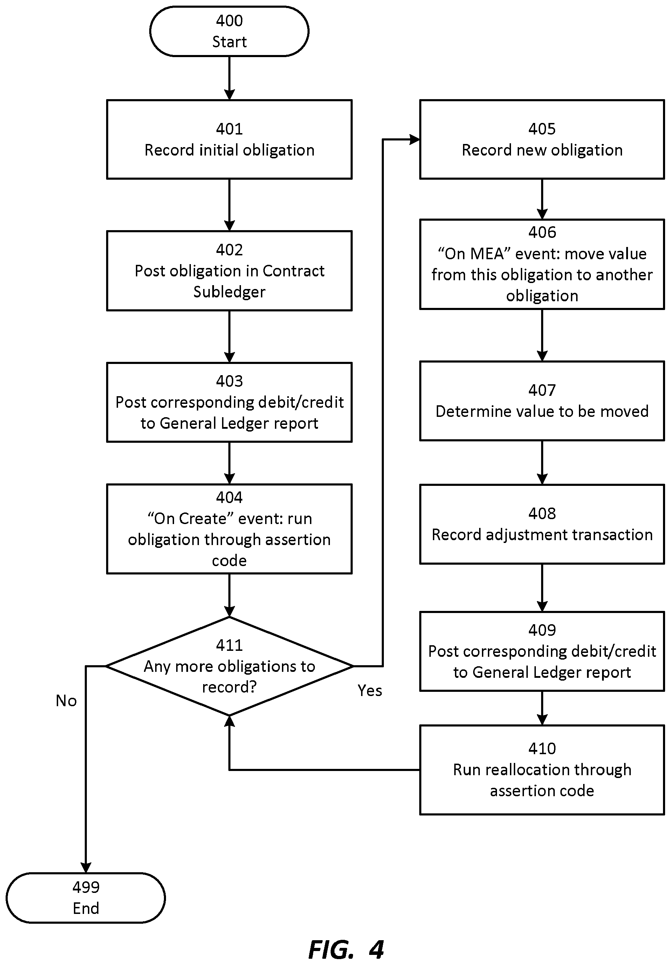

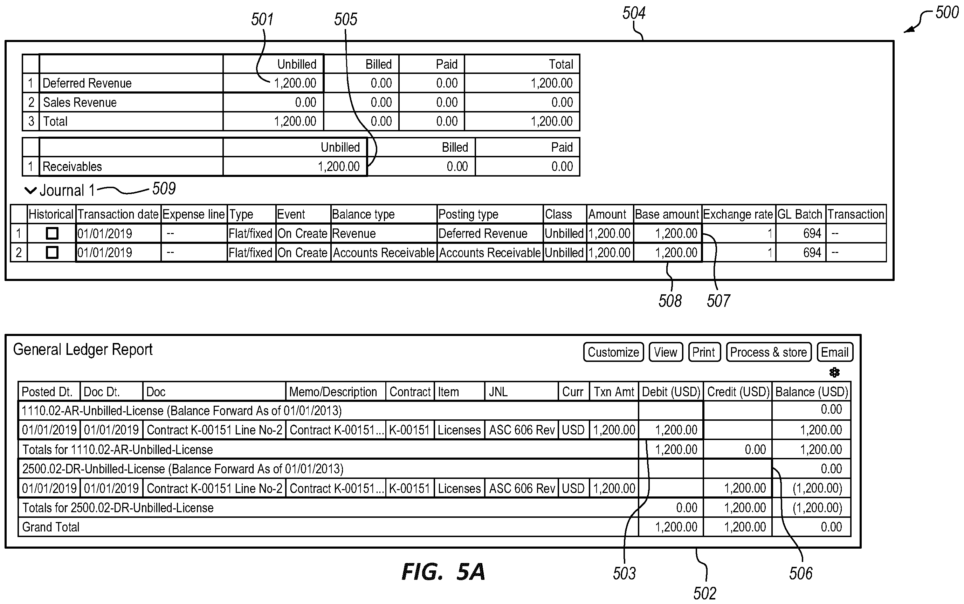

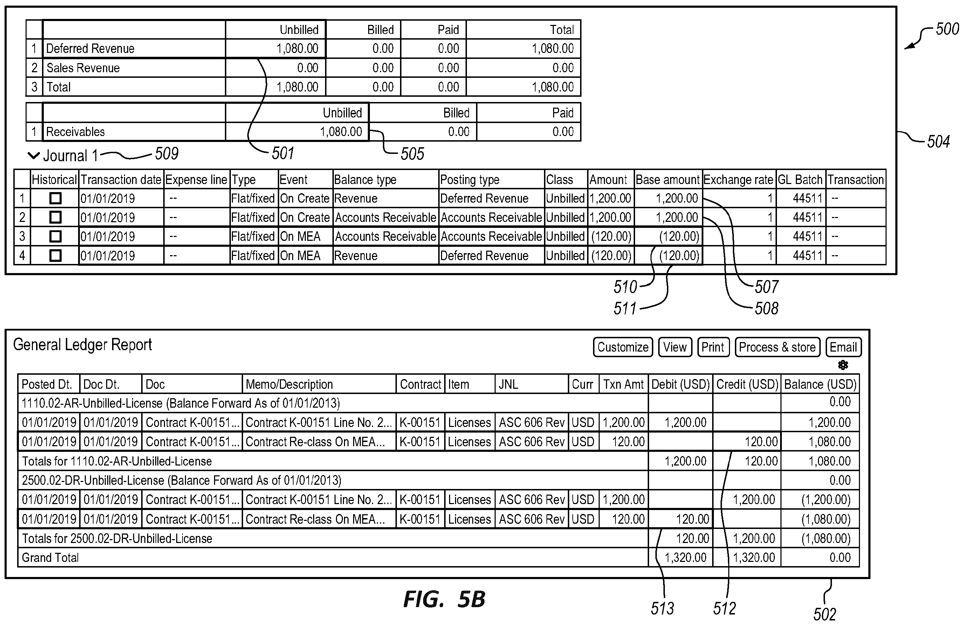

Referring now to Fig. 4, there is shown a flow diagram depicting a workflow that follows a single obligation on a single contract. Referring also to Figs. 5A and 5B, there is shown an illustrative example 500 of application of the workflow depicted in Fig. 4, including contract subledger 504 and general ledger report 502. For illustrative purposes, the workflow depicted in Figs. 4, 5A, and 5B presents a simplified view of accounting transactions booked for the single contract.

In at least one embodiment, as depicted in Figs. 4, 5A, and 5B, GL assertions are generating and audited as events occur real-time. The system can be configured to automatically block workflow if the internal audit shows a discrepancy between values reflected in the contract and the general ledger.

The method begins 400. A single obligation is recorded 401 on a contract, and is posted 402 in contract subledger 504, with a corresponding debit/credit posted 403 to general ledger report 502. In the example of Fig. 5A, the total booking for the single obligation is for $1,200. This amount is listed in Unbilled Deferred Revenue cell 501 and Unbilled Accounts Receivable cell 505 of contract subledger 504. Journal 509 shows entry 507 for the posting to Deferred Revenue cell 501, and entry 508 for the posting to Unbilled Accounts Receivable cell 505. Corresponding debit/credits are posted to cells 503 and 506 of general ledger report 502.

In at least one embodiment, an "On Create" event is triggered 404 when the contract obligation is recorded (booked) 401, causing the contract obligation to be run through assertion code to verify the validity of the booked amount, and to ensure that the correct amount is recorded from the subledger to the general ledger.

In step 411, if no additional obligations need to be recorded, the method ends 499. Otherwise, another obligation is recorded 405 on this contract. Per ASC 606, this obligation may require a reallocation of transaction price to be performed. For example, when multiple obligations are under contract in a bundled arrangement, such as in a multi-element arrangement (MEA), and one or more of the obligations are offered at a premium or discount compared to the standalone selling price (SSP) of that obligation, a reallocation of revenue may be required. This may involve reducing revenue associated with some obligations, and adding revenue to other obligations, so that the revenue associated with any given obligation within the MEA is recognized at a weighted percentage of the entire MEA's value based on that item's SSP.

In at least one embodiment, this new obligation triggers 406 a revenue reallocation event referred to as an "On MEA" event (referring to a Multi-Element Arrangement), which causes value to be moved from this obligation to another obligation. In at least one embodiment, appropriate functionality can be called 407 to determine the value that needs to be moved from this obligation to another obligation. The adjustment transaction is then recorded 408.

In the example of Fig. 5B, it is determined that $120 in value must be moved from the initial obligation to another obligation. The amounts listed in Unbilled Deferred Revenue cell 501 and Unbilled Accounts Receivable cell 505 of contract subledger 504 are adjusted to now read $1080. Journal 509 now includes entry 510 for the $120 adjustment to Deferred Revenue cell 501, and entry 511 for the $120 adjustment to Unbilled Accounts Receivable cell 505. Corresponding debit/credits are posted 409 to cells 512 and 513 of general ledger report 502.

In at least one embodiment, the reallocation of transaction price value across various accounts is run through the assertion code 410 to verify the validity of the $120 reallocation from the subledger to the general ledger.

Steps 405 through 410 can be repeated for any additional obligations that may need to be recorded. Thus, after performing step 410, the method returns to step 411 to determine whether any additional obligations need to be recorded.

As described and depicted, Figs. 4, 5A, and 5B present a high-level workflow for handling a particular contract, including an initial obligation and a newly added obligation. As can be seen from this example, significant complications can be triggered when additional obligations are added, when contract modifications occur, when multiple reallocations take place, and/or when the timing of events change between obligations due to ASC 606 requirements. In at least one embodiment, the system and method described herein provides for real-time auditing during the processing of such events, so as to ensure that all entries are accurately reconciled and recorded immediately as they occur.

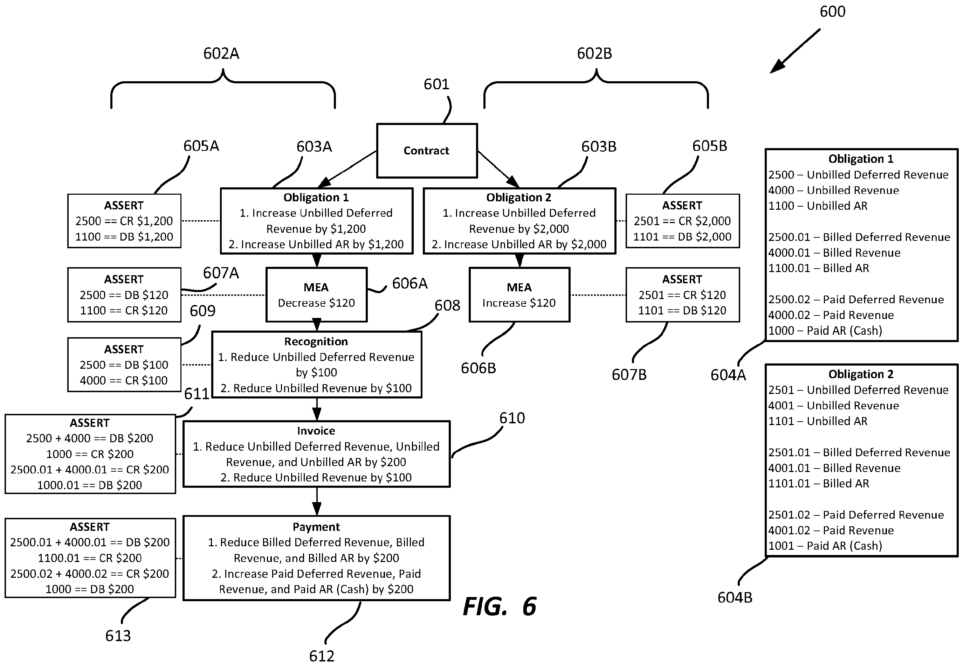

Referring now to Fig. 6, there is shown an example of a life cycle events diagram 600, wherein contract 601 includes two obligations. Column 602A depicts actions taken with respect to obligation 1, and column 602B depicts actions taken with respect to obligation 2.

For illustrative purposes, as shown in box 604A, the following account numbers are associated with obligation 1:
- Unbilled Deferred Revenue - 2500
- Unbilled Revenue - 4000
- Unbilled AR - 1100
- Billed Deferred Revenue - 2500.01
- Billed Revenue - 4000.01
- Billed AR - 1100.01
- Paid Deferred Revenue - 2500.02
- Paid Revenue - 4000.02
- Paid AR (Cash) - 1000

For illustrative purposes, as shown in box 604B, the following account numbers are associated with obligation 2:
- Unbilled Deferred Revenue - 2501
- Unbilled Revenue - 4001
- Unbilled AR - 1101
- Billed Deferred Revenue - 2501.01
- Billed Revenue - 4001.02
- Billed AR - 1101.01
- Paid Deferred Revenue - 2501.02
- Paid Revenue - 4001.02
- Paid AR (Cash) - 1001

In steps 603A and 603B, the contract is created, with Obligation 1 having a price of $1,200 and Obligation 2 having a price of $2,000, as follows:
- Increase Unbilled Deferred Revenue for Obligation 1 by $1,200
- Increase Unbilled Deferred Revenue for Obligation 2 by $2,000
- Increate Unbilled AR for Obligation 1 by $1,200
- Increate Unbilled AR for Obligation 2 by $2,000

An "On Create" GL assertion is triggered, including recording the following transactions for the contract, as shown in boxes 605A, 605B:
- Net change in balance for Unbilled Deferred Revenue account 2500 == CR $1,200
- Net change in balance for Unbilled Deferred Revenue account 2501 == CR $2,000
- Net change in balance for Unbilled AR account 1100 == DB $1,200
- Net change in balance for Unbilled AR account 1101 == DB $2,000

Next, the following reallocation of the transaction price (MEA) takes place for the contract, as shown in boxes 606A, 606B:
- Obligation 1 - Reduce by $120
- Obligation 2 - Increase by $120

An "On MEA" assertion is triggered, including recording the following transactions for the contract, as shown in boxes 607A, 607B:
- Net change in balance for Unbilled Deferred Revenue account 2500 == DB $120
- Net change in balance for Unbilled Deferred Revenue account 2501 == CR $120
- Net change balance for Unbilled AR account 1100 == CR $120
- Net change balance for Unbilled AR account 1101 == DB $120

After these transactions have taken place, the prices for the obligations are as follows:
- Obligation 1 price - $1,080 ($1,200 - $120)
- Obligation 2 price - $2,120 ($2,000 + $120)

In step 608, revenue is recognized. Specifically, $100 of revenue for Obligation 1 is recognized, as follows:
- Reduce Unbilled Deferred Revenue by $100
- Increase Unbilled Revenue by $100

An "On Recognition" GL assertion for Obligation 1 is triggered, including recording the following transactions for the contract, as shown in box 609:
- Net change in balance for Unbilled Deferred Revenue account 2500 == DB $100
- Net change in balance for Unbilled Revenue account 4000 == CR $100

In step 610, an invoice is generated, in the amount of $200 for Obligation 1, as follows:
- Reduce Unbilled Deferred Revenue, Unbilled Revenue and Unbilled AR by $200
- Increase Billed Deferred Revenue, Billed Revenue and Billed AR by $200

An "On Invoice" GL assertion for Obligation 1 is triggered, including recording the following transactions for the contract, as shown in box 611:
- Net change in balance for Unbilled Deferred Revenue account 2500 and Unbilled Revenue account 4000 == DB $200
- Net change in balance Unbilled AR account 1100 == CR $200
- Net change in balance for Billed Deferred Revenue account 2500.01 and Billed Revenue account 4000.01 == CR $200
- Net change in balance Billed AR account 1100.01 == DB $200

In step 612, the invoice for $200 for Obligation 1 is paid, as follows:
- Reduce Billed Deferred Revenue, Billed Revenue and Billed AR by $200
- Increase Paid Deferred Revenue, Paid Revenue and Paid AR (Cash) by $200

An "On Payment" GL assertion for payment of the invoice for Obligation 1 is triggered, including recording the following transactions for the contract, as shown in box 613:
- Net change in balance for Billed Deferred Revenue account 2500.01 and Billed Revenue account 4000.01 == DB $200
- Net change in balance Billed AR account 1100.01 == CR $200
- Net change in balance for Paid Deferred Revenue account 2500.02 and Paid Revenue account 4000.02 == CR $200
- Net change in balance Paid AR (Cash) account 1000 == DB $200

### Method

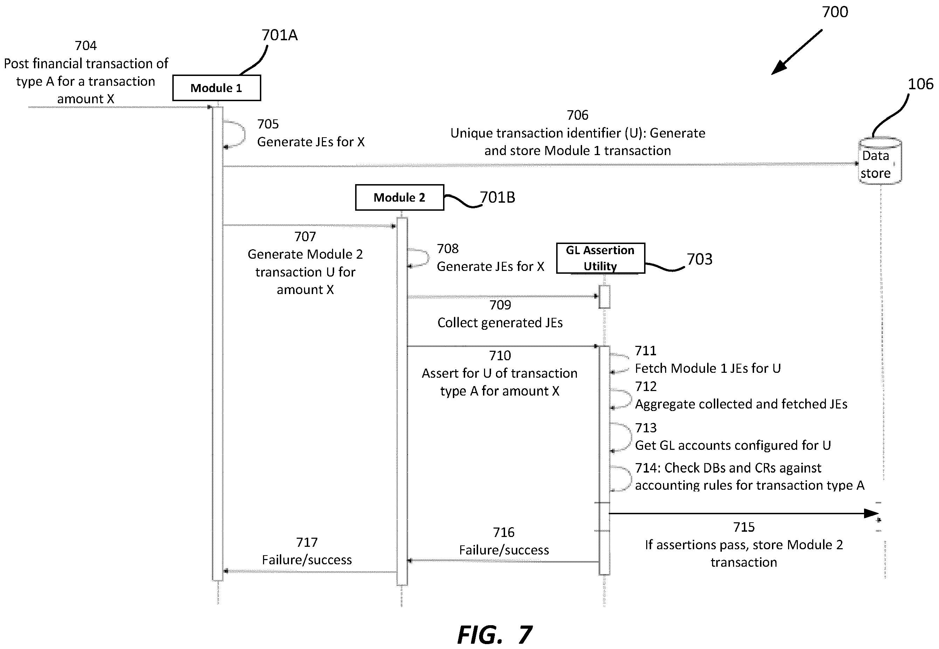

Referring now to Fig. 7, there is shown an event trace diagram depicting a method 700 for generating and auditing general ledger assertions for a contract transaction according to one embodiment. The steps shown in method 700 may be performed by various modules of an accounting software application. In at least one embodiment, as shown in the example of Fig. 7, two such modules 701A, 702A are shown, each of is able to generate journal entry (JE) transactions. In addition, as described in more detail below, GL assertion utility 703 performs various functions to ensure that specified accounting rules are being followed. One skilled in the art will recognize that the particular distribution of steps among components as depicted in Fig. 7 is merely exemplary, and that the steps and techniques described herein can be performed by a single software module or any combination of multiple modules.

A financial transaction of type A, for a transaction amount X, is posted 704 to accounting module 701A. Module 701A generates 705 journal entries for the transaction amount X. The transaction is given a unique transaction identifier U, and the transaction is stored 706 in data store 106, for example at a database.

Based on the nature of the transaction posted in step 704, module 701A passes transaction U to module 701B for further processing, resulting in a second transaction being generated 707. In response, module 701B generates 708 additional journal entries for the transaction amount X. In this manner, the system ensures that the combined effect of all journal entries on the GL satisfies accounting rules.

Once the journal entries have been generated, GL assertion utility 703 performs three steps:
- Collect in-memory journal entries (step 709, described below);
- Fetch stored journal entries (step 711, described below); and
- Check all debits and credits against accounting rules (step 714, described below).

First, GL assertion utility 703 collects 709 the generated journal entries. Module 701B generates an assertion 710 for U for transaction type A in the amount of X, by causing GL assertion utility 703 to perform steps 711 through 716. First, GL assertion utility 703 fetches 711 the journal entries generated in step 705 by module 701A, for example from data store 106. GL assertion utility 703 then aggregates 712 the collected and fetched journal entries. GL assertion utility 703 then gets 713 the general ledger accounts configured for transaction U, and checks 714 all debits and credits against accounting rules for transaction type A.

If the assertions pass, GL assertion utility 703 causes transaction U to be stored 715 in data store 106. In at least one embodiment, if the assertions do not pass, GL assertion utility 703 stops the transaction from being stored.

A notification or alert of the failure/success of the assertions is sent 716 to module 701B, which then forwards 717 the notification or alert to module 701A.

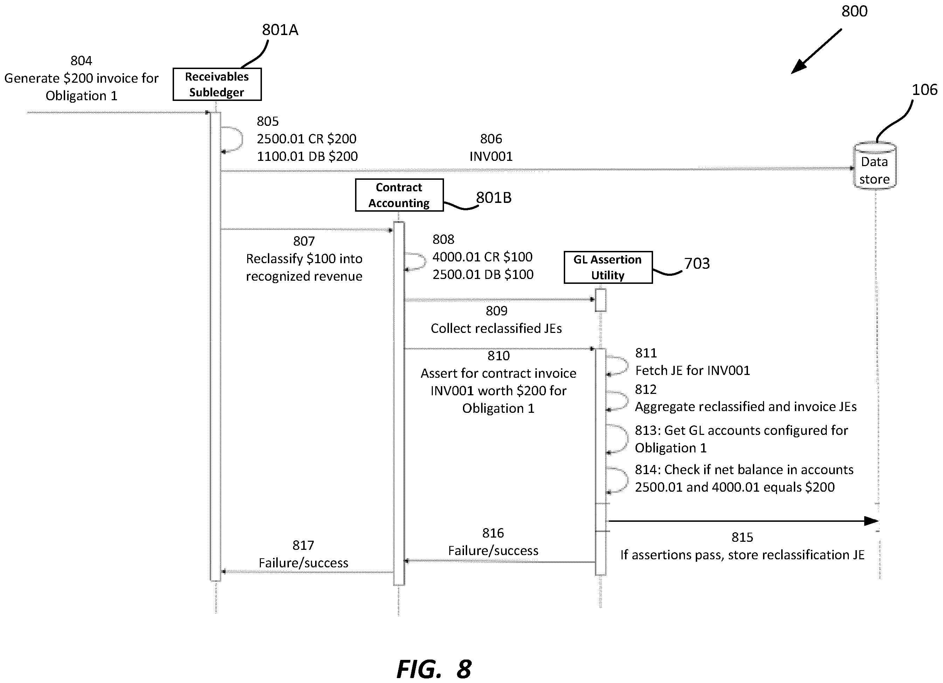

Referring now to Fig. 8, there is shown an event trace diagram depicting an example 800 of the application of method 700 to an actual transaction. In the example of Fig. 8, receivables subledger 801A is an example of module 701A, and contract accounting 801B is an example of module 701B.

A $200 invoice is posted 804 to receivables subledger 801A for obligation 1. Receivables subledger 801A generates 805 journal entries for the invoice (designated with transaction identifier INV001), including a $200 credit to account 2500.01 and a $200 debit to account 1100.01. Invoice INV001 is stored 806 in data store 106, for example at a database.

Receivables subledger 801A passes 807 invoice INV001 to contract accounting 801B for revenue reclassification. Since $100 is already recognized, contract accounting 801B reclassifies $100 from a deferred billed revenue account to a billed revenue account. This involves generating 808 journal entries including a $100 credit to account 4001.01 and a $100 debit to account 2500.01.

GL assertion utility 703 collects 809 the generated reclassification journal entries. Contract account 801B generates an assertion 810 for invoice INV001 in the amount of $200, by causing GL assertion utility 703 to perform steps 811 through 816. First, GL assertion utility 703 fetches 811, from data store 106, those journal entries previously stored by receivables subledger 801A. GL assertion utility 703 then aggregates 812 all debits and credits from both the fetched journal entry and the reclassification journal entry. These include:
- $200 credit to account 2500.01 and $200 debit to account 1100.01;
- $100 credit to account 4001.01 and $100 debit to account 2500.01

The net balance that results from these journal entries is:
- $100 credit to account 2500.01, $100 credit to account 4001.01, and $200 debit to account 1100.01

GL assertion utility 703 then gets 813 the general ledger accounts configured for invoice INV001, and checks 814 that the net balance in accounts 2500.01 and 4000.01 is equal to the expected amount of $200.

If the assertions pass, GL assertion utility 703 causes the reclassification journal entries to be stored 815 in data store 106. In at least one embodiment, if the assertions do not pass, GL assertion utility 703 stops the transaction from being stored.

A notification or alert of the failure/success of the assertions is sent 716 to module 701B, which then forwards 717 the notification or alert to module 701A.

The present system and method have been described in particular detail with respect to possible embodiments. Those of skill in the art will appreciate that the system and method may be practiced in other embodiments. First, the particular naming of the components, capitalization of terms, the attributes, data structures, or any other programming or structural aspect is not mandatory or significant, and the mechanisms and/or features may have different names, formats, or protocols. Further, the system may be implemented via a combination of hardware and software, or entirely in hardware elements, or entirely in software elements. Also, the particular division of functionality between the various system components described herein is merely exemplary, and not mandatory; functions performed by a single system component may instead be performed by multiple components, and functions performed by multiple components may instead be performed by a single component.

Reference in the specification to "one embodiment" or to "an embodiment" means that a particular feature, structure, or characteristic described in connection with the embodiments is included in at least one embodiment. The appearances of the phrases "in one embodiment" or "in at least one embodiment" in various places in the specification are not necessarily all referring to the same embodiment.

Various embodiments may include any number of systems and/or methods for performing the above-described techniques, either singly or in any combination. Another embodiment includes a computer program product comprising a non-transitory computer-readable storage medium and computer program code, encoded on the medium, for causing a processor in a computing device or other electronic device to perform the above-described techniques.

Some portions of the above are presented in terms of algorithms and symbolic representations of operations on data bits within a memory of a computing device. These algorithmic descriptions and representations are the means used by those skilled in the data processing arts to most effectively convey the substance of their work to others skilled in the art. An algorithm is here, and generally, conceived to be a self-consistent sequence of steps (instructions) leading to a desired result. The steps are those requiring physical manipulations of physical quantities. Usually, though not necessarily, these quantities take the form of electrical, magnetic or optical signals capable of being stored, transferred, combined, compared and otherwise manipulated. It is convenient at times, principally for reasons of common usage, to refer to these signals as bits, values, elements, symbols, characters, terms, numbers, or the like. Furthermore, it is also convenient at times, to refer to certain arrangements of steps requiring physical manipulations of physical quantities as modules or code devices, without loss of generality.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "displaying" or "determining" or the like, refer to the action and processes of a computer system, or similar electronic computing module and/or device, that manipulates and transforms data represented as physical (electronic) quantities within the computer system memories or registers or other such information storage, transmission or display devices.

Certain aspects include process steps and instructions described herein in the form of an algorithm. It should be noted that the process steps and instructions can be embodied in software, firmware and/or hardware, and when embodied in software, can be downloaded to reside on and be operated from different platforms used by a variety of operating systems.

The present document also relates to an apparatus for performing the operations herein. This apparatus may be specially constructed for the required purposes, or it may comprise a general-purpose computing device selectively activated or reconfigured by a computer program stored in the computing device. Such a computer program may be stored in a computer readable storage medium, such as, but is not limited to, any type of disk including floppy disks, optical disks, CD-ROMs, DVD-ROMs, magnetic-optical disks, read-only memories (ROMs), random access memories (RAMs), EPROMs, EEPROMs, flash memory, solid state drives, magnetic or optical cards, application specific integrated circuits (ASICs), or any type of media suitable for storing electronic instructions, and each coupled to a computer system bus. Further, the computing devices referred to herein may include a single processor or may be architectures employing multiple processor designs for increased computing capability.

The algorithms and displays presented herein are not inherently related to any particular computing device, virtualized system, or other apparatus. Various general-purpose systems may also be used with programs in accordance with the teachings herein, or it may prove convenient to construct more specialized apparatus to perform the required method steps. The required structure for a variety of these systems will be apparent from the description provided herein. In addition, the system and method are not described with reference to any particular programming language. It will be appreciated that a variety of programming languages may be used to implement the teachings described herein, and any references above to specific languages are provided for disclosure of enablement and best mode.

Accordingly, various embodiments include software, hardware, and/or other elements for controlling a computer system, computing device, or other electronic device, or any combination or plurality thereof. Such an electronic device can include, for example, a processor, an input device (such as a keyboard, mouse, touchpad, track pad, joystick, trackball, microphone, and/or any combination thereof), an output device (such as a screen, speaker, and/or the like), memory, long-term storage (such as magnetic storage, optical storage, and/or the like), and/or network connectivity, according to techniques that are well known in the art. Such an electronic device may be portable or non-portable. Examples of electronic devices that may be used for implementing the described system and method include: a mobile phone, personal digital assistant, smartphone, kiosk, server computer, enterprise computing device, desktop computer, laptop computer, tablet computer, consumer electronic device, or the like. An electronic device may use any operating system such as, for example and without limitation: Linux; Microsoft Windows, available from Microsoft Corporation of Redmond, Washington; MacOS, available from Apple Inc. of Cupertino, California; iOS, available from Apple Inc. of Cupertino, California; Android, available from Google, Inc. of Mountain View, California; and/or any other operating system that is adapted for use on the device.

While a limited number of embodiments have been described herein, those skilled in the art, having benefit of the above description, will appreciate that other embodiments may be devised. In addition, it should be noted that the language used in the specification has been principally selected for readability and instructional purposes, and may not have been selected to delineate or circumscribe the subject matter. Accordingly, the disclosure is intended to be illustrative, but not limiting, of scope.

## Claims

1. A system for asserting and auditing general ledger balance changes associated with accounting transactions, comprising:
a storage device, configured to post general ledger adjustments corre-sponding to an accounting transaction; and
a hardware processor, communicatively coupled to the storage device, configured to, in response to the posted general ledger adjustments, and substan-tially in real-time, performing the steps of:
automatically activating an assertion utility to perform an audit to assess the accuracy of the posted general ledger adjustments;
responsive to the audit indicating that the posted general ledger adjust-ments are accurate, causing the storage device to store the transaction as a valid transaction;
responsive to the audit indicating that the posted general ledger adjust-ments are not accurate, stopping the storage device from storing the transaction as a valid transaction; and
generating a notification as to the result of the audit; and
an electronic communications device, communicatively coupled to the hardware processor, configured to transmit the generated notification.

2. The system of claim 1, wherein automatically activating the asser-tion utility to perform the audit to assess the accuracy of the posted general ledg-er adjustments comprises automatically checking the posted general ledger ad-justments against current accounting rules.

3. The system of claim 2, wherein automatically checking the posted general ledger adjustments against current accounting rules comprises automati-cally checking whether the posted general ledger adjustments accurately recog-nize revenue.

4. The system of claim 1, wherein automatically activating the asser-tion utility to perform the audit to assess the accuracy of the posted general ledg-er adjustments comprises automatically determining whether the posted general ledger adjustments comply with ASC 606 accounting standards.

5. The system of claim 1, wherein the accounting transaction compris-es fulfillment of at least a portion of at least one obligation of a contract.

6. The system of claim 1, wherein the accounting transaction compris-es fulfillment of a plurality of obligations in a multi-element arrangement.

7. The system of claim 6, wherein the general ledger adjustments cor-responding to the accounting transaction comprise adjustments based on standalone selling price for at least one element of the multi-element arrange-ment.

8. A computer-implemented method for asserting and auditing gen-eral ledger balance changes associated with accounting transactions, comprising:
at a storage device, posting general ledger adjustments corresponding to an accounting transaction; and
in response to the posted general ledger adjustments, and substantially in real-time, performing the steps of:
at a hardware processor, automatically activating an assertion utility to perform an audit to assess the accuracy of the posted general ledger adjustments;
at the hardware processor, responsive to the audit indicating that the posted general ledger adjustments are accurate, causing the storage device to store the transaction as a valid transac-tion;
at the hardware processor, responsive to the audit indicating that the posted general ledger adjustments are not accurate, stopping the storage device from storing the transaction as a valid transaction;
at the hardware processor, generating a notification as to the result of the audit; and
transmitting the generated notification.

9. The method of claim 8, wherein automatically activating the asser-tion utility to perform the audit to assess the accuracy of the posted general ledg-er adjustments comprises automatically checking the posted general ledger ad-justments against current accounting rules.

10. The method of claim 9, wherein automatically checking the posted general ledger adjustments against current accounting rules comprises automati-cally checking whether the posted general ledger adjustments accurately recog-nize revenue.

11. The method of claim 8, wherein automatically activating the asser-tion utility to perform the audit to assess the accuracy of the posted general ledg-er adjustments comprises automatically determining whether the posted general ledger adjustments comply with ASC 606 accounting standards.

12. The method of claim 8, wherein the accounting transaction com-prises fulfillment of at least a portion of at least one obligation of a contract.

13. The method of claim 8, wherein the accounting transaction com-prises fulfillment of a plurality of obligations in a multi-element arrangement.

14. The method of claim 13, wherein the general ledger adjustments corresponding to the accounting transaction comprise adjustments based on standalone selling price for at least one element of the multi-element arrangement.

15. A computer-readable medium comprising instructions which, when executed by a computer, cause the computer to carry out the steps of the method of any of claims 8 to 14.
